(19) Europäisches Patentamt
European Patent Office
Office européen des brevets

(11) Numéro de publication : **0 141 705**
**B1**

(12) **FASCICULE DE BREVET EUROPÉEN**

(45) Date de publication du fascicule du brevet : **16.06.87**

(51) Int. Cl.⁴ : **C 08 L 5/00**, C 09 K 7/02, E 21 B 43/25

(21) Numéro de dépôt : **84401905.9**

(22) Date de dépôt : **25.09.84**

(54) **Procédé de stabilisation thermique de solutions aqueuses de polysaccharides et son application aux fluides de forage.**

(30) Priorité : **28.09.83 FR 8315408**

(43) Date de publication de la demande : **15.05.85 Bulletin 85/20**

(45) Mention de la délivrance du brevet : **16.06.87 Bulletin 87/25**

(84) Etats contractants désignés : **GB IT NL**

(56) Documents cités : **US-A- 4 218 327**

(73) Titulaire : **SOCIETE NATIONALE ELF AQUITAINE**
**Tour Aquitaine - Cédex 4**
**F-92080 Paris la Défense (FR)**

(72) Inventeur : **Vio, Lino**
**73 Avenue Copernic**
**F-64000 Pau (FR)**
Inventeur : **Meunier, Gilles**
**Bourg de Mazerolles Mazerolles**
**F-64230 Lescar (FR)**

(74) Mandataire : **Kohn, Armand**
**5 Avenue Foch**
**F-92380 Garches (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue St-Denis, 75001 Paris, France

**Description**

La présente invention concerne la stabilisation à la chaleur des polymères hydrosolubles à base de polysaccharides. Elle s'applique plus spécialement à la stabilisation des solutions à base de saccharides de synthèse, notamment xanthanes et scléroglucanes qui trouvent une importante application dans les fluides de forage et dans la récupération améliorée du pétrole.

Il est bien connu, dans la technique moderne de forage, d'incorporer au fluide en circulation des substances réglant la viscosité de celui-ci à la valeur voulue. Les substances, employées le plus souvent à l'heure actuelle, sont des polymères hydrosolubles, surtout polyacrylamide, polysaccharides et carboxyméthylcelluloses. Etant donné que, dans les couches profondes de forage, on rencontre des températures plus ou moins élevées, les polymères en question subissent, à la longue, des modifications chimiques, qui se traduisent par une chute de la viscosité. Le même inconvénient se retrouve dans la récupération assistée du pétrole. D'une façon générale, avec les polymères connus, tels quels, la viscosité des boues ou/et des solutions aqueuses baisse rapidement dès que l'on dépasse une température d'environ 65 °C. Pour y remédier, des stabilisants ont été trouvés, qui permettent d'utiliser plus longtemps un polymère donné. Ainsi dans le cas des polysaccharides, qui sont intéressants tant pour le forage lui-même que pour la récupération assistée, on a proposé comme stabilisants des antioxygènes contenant du soufre, tel que mercaptans, thioéthers, thiourées ou acides dithioacétiques associés à des alcools facilement oxydables, comme décrit dans le brevet US-A-4 218 327. Il semble que de tels adjuvants améliorent la stabilité des polysaccharides, même à des températures voisines de 100 °C, à condition qu'il n'y ait pas plus de 5 % de sel dans le liquide (brevet US cité, colonne 2, ligne 37).

La présente invention apporte un progrès technique marqué par rapport à l'art antérieur, en ce qu'elle permet d'utiliser des polysaccharides à des températures supérieures à 70 °C ou comprises entre 90 et 130 °C, pendant des mois, même en présence de concentrations assez fortes en sels, notamment avec plus de 30 % NaCl.

Cette activité en présence de sels constitue d'ailleurs un élément inattendu de l'invention : en effet, les dithiocarbamates ne stabilisent pas les solutions aqueuses de polysaccharides en l'absence de sel, contrairement à ce qui se passe pour des solutions de polyacrylamides. C'est sans doute à cause de cela que personne, jusqu'à présent, n'a proposé d'employer des dithiocarbamates pour stabiliser des polysaccharides alors qu'on a proposé différentes autres substances contenant du soufre. Un essai de stabilité d'une solution polysaccharidique, exempte de sels, additionnée de diméthyl-dithiocarbamate de sodium, était, en effet, de nature à décourager complètement l'expérimentateur de l'emploi de dithiocarbamate comme stabilisant.

Or, en solution saline, on obtient de bons résultats, grâce à l'emploi d'un stabilisant constitué par un dialkyldithiocarbamate de métal alcalin dissous dans la solution de polysaccharides.

Un autre avantage du procédé suivant l'invention réside en ce qu'il n'est pas nécessaire d'employer, conjointement avec ce stabilisant, un alcool ou autre composé facilement oxydable. On peut même se dispenser de la désoxygénation du fluide employé, si la teneur en oxygène de celui-ci n'est pas exagérée.

Les dialkylthiocarbamates de métaux alcalins répondent à la formule $R_2$

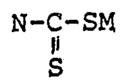

où R désigne un alkyle en $C_1$ à $C_{12}$ et, de préférence en $C_1$ à $C_4$, M étant un atome de métal alcalin, principalement Na ou K.

La proportion de ce stabilisant, à utiliser dans un fluide donné, dépend de la nature du dithiocarbamate, de la nature particulière du polysaccharide, de la salinité du liquide et de la température, mais les doses usuelles se situent en général entre 150 et 5 000 ppm et le plus souvent entre 300 et 1 000 ppm. Il est à noter que les doses les plus faibles conviennent lorsque la solution contient du NaCl seul ou accompagné de très peu de cations bivalents, notamment de $CaCl_2$ ; par contre, la proportion de stabilisant doit être augmentée dans la mesure où la teneur en $CaCl_2$ augmente dans le liquide.

Les exemples, non limitatifs, qui suivent, illustrent l'invention. Dans les 32 premiers de ces exemples, la stabilité d'une solution aqueuse à 2 g par litre de polysaccharide, connue dans le commerce sous la marque de fabrique RHODOPOL 23R (lot 80-209-2 fourni par la Société RHONE-POULENC) était déterminée par chauffage en tubes scellés, à 90 °C. Avant le chauffage, la solution était dégazée de façon à ne pas contenir plus de 0,5 ppm d'oxygène.

Le critère de l'altération du polysaccharide était la viscosité déterminée à 25 °C avant et après différentes durées de chauffage, au moyen de l'appareil « RHEOMAT 30 » (marque de fabrique), dans une cuve $MS_0$ à 10 $sec^{-1}$. Exprimée en mPa.s, cette viscosité est indiquée dans les tableaux de résultats qui suivent. Le stabilisant essayé était le diméthyl-dithiocarbamate de sodium, en abrégé DMDTCS, dont on dissolvait des quantités variables dans la solution à essayer.

Dans la plupart des essais, la solution contenait des sels, NaCl ou/et $CaCl_2$, dont le rôle est ainsi mis en lumière. Les variations de pH, qui accompagnent l'altération des solutions, sont notées dans chaque cas.

Exemples 1 à 8

Solutions de polysaccharide à 300 g NaCl par litre

| Ex. n° | DMDTCS ppm | Initial | | Après 1 mois à 90 °C | | Après 3 mois à 90 °C | |
|---|---|---|---|---|---|---|---|
| | | Visc. mPa.s | pH | mPa.s | pH | mPa.s | pH |
| 1 | 0 | 140 | — | 3 | 3,4 | 3 | 3,4 |
| 2 | 50 | 141 | — | 24 | 3,8 | 4,5 | 3,8 |
| 3 | 150 | 141 | — | 24 | 4,4 | 21 | 4,5 |
| 4 | 250 | 142 | 6,6 | 141,5 | 6,8 | 126 | 5,9 |
| 5 | 350 | 145,9 | 6,2 | 145,9 | 7,4 | 143 | 6,3 |
| 6 | 400 | 138,5 | 6,3 | 137 | 6,4 | 140 | 6,4 |
| 7 | 450 | 144 | — | 143 | 6,6 | 137 | 5,7 |
| 8 | 600 | 144,5 | — | 147,5 | 6,8 | 139 | 6,2 |

On voit que sans l'adjuvant DMDTCS, ou avec pas plus de 50 ppm de celui-ci, la dégradation du polysaccharide est très poussée à 90 °C : déjà après 30 jours, la viscosité tombe de 140 mPa.s à 3 ou 4,5. Par contre, il suffit de 250 ppm de ce stabilisant suivant l'invention pour n'avoir plus qu'une faible chute, et la stabilisation est pratiquement très bonne avec 350 à 600 ppm.

Exemples 9 à 15

La solution de polysaccharide contient 20 g/l de $CaCl_2$ en plus de 300 g/l de NaCl des exemples précédents.

| Ex. n° | DMDTCS ppm | Initial | | Après 1 mois à 90 °C | | Après 3 mois à 90 °C | |
|---|---|---|---|---|---|---|---|
| | | mPa.s | pH | mPa.s | pH | mPa.s | pH |
| 9 | 0 | 145 | — | 3 | 3,5 | 3 | 3,5 |
| 10 | 150 | 145 | — | 5 | 4,2 | 3 | 4,2 |
| 11 | 250 | 145 | 6,2 | — | — | 113 | 5,4 |
| 12 | 350 | 145 | 7 | 4,5 | 5 | 137 | 6,2 |
| 13 | 400 | 146 | 7 | 126 | 6,4 | 137 | 6,1 |
| 14 | 450 | 143 | — | 147,5 | 6,4 | 142 | 6,0 |
| 15 | 600 | 143 | — | 156,5 | 6,7 | 153 | 6,4 |

Ces résultats montrent que la présence de $CaCl_2$ exige une proportion légèrement plus forte de dithiocarbamate, notamment 450 ppm selon l'exemple 14, au lieu de 350 dans l'exemple 5. Il y a donc encore une excellente stabilisation lorsque la solution contient du NaCl et du $CaCl_2$.

Exemples 16 à 21

Solution à teneur plus faible en NaCl. Elle renferme 150 g NaCl/l et 20 g $CaCl_2$/l.

| Ex. n° | DMDTCS ppm | Initial | | Après 1 mois à 90 °C | | Après 3 mois à 90 °C | |
|---|---|---|---|---|---|---|---|
| | | mPa.s | pH | mPa.s | pH | mPa.s | pH |
| 16 | 0 | 132,5 | — | 4,5 | 3,6 | 4,5 | 3,6 |
| 17 | 150 | 132,5 | 7,5 | — | — | 13,5 | 4,7 |
| 18 | 250 | 132,5 | 7,5 | 3 | 5,1 | 120,5 | 6,4 |
| 19 | 350 | 132,5 | 7,4 | 77,5 | 6,2 | 103,5 | 5,9 |
| 20 | 400 | 132,5 | 7,4 | 98 | 6,5 | 122 | 6,3 |
| 21 | 600 | 132,5 | — | 140 | 6,54 | 139 | 6,4 |

Ces essais confirment la particularité de l'invention, d'après laquelle le sel contribue à l'action

stabilisante du dithiocarbamate alcalin. On trouve, en effet, avec la moitié de la concentration précédente en NaCl, des résultats moins bons pour des teneurs inférieures à 400 ppm, et surtout 600 ppm de stabilisant.

Néanmoins, les résultats des exemples 18 à 21 sont industriellement fort intéressants, mais le double de NaCl (300 g/l) des exemples 12 à 14, la stabilisation est encore meilleure, pour une même teneur en $CaCl_2$.

Exemples 22 à 27

Solution contenant seulement du $CaCl_2$ : 20 g/l

| Ex. n° | DMDTCS ppm | Initial | | Après 1 mois à 90 °C | | Après 3 mois à 90 °C | |
|---|---|---|---|---|---|---|---|
| | | mPa.s | pH | mPa.s | pH | mPa.s | pH |
| 22 | 0 | 117,5 | — | 3 | 4 | 3 | 4 |
| 23 | 150 | 120 | — | 44,5 | 4,7 | 6 | 4,5 |
| 24 | 250 | 122 | 6,5 | 62,5 | 6,1 | 50,5 | 5,8 |
| 25 | 350 | 123 | 6,8 | 102,5 | 6,7 | 97 | 6,2 |
| 26 | 450 | 125 | — | 104 | 5,9 | 105 | 6 |
| 27 | 600 | 126,5 | — | 122 | 6,5 | 117 | 6,3 |

L'optimum de l'effet stabilisateur se situe ici aux environs de 600 ppm de dithiocarbamate, selon l'exemple 27. C'est un très bon résultat pratique, la dose de 600 ppm étant tout à fait viable industriellement.

Exemples 28-32

Solution du polysaccharide dans l'eau distillée, sans aucun sel.

| Ex. n° | DMDTCS ppm | Initial | | Après 1 mois à 90 °C | | Après 3 mois à 90 °C | |
|---|---|---|---|---|---|---|---|
| | | mPa.s | pH | mPa.s | pH | mPa.s | pH |
| 28 | 0 | 119 | — | 3 | 4,2 | | |
| 29 | 150 | 122 | — | 3 | 5 | | |
| 30 | 600 | 125 | — | 4,5 | 6,9 | | |
| 31 | 1000 | 128 | 7,9 | 28,5 | 8,6 | 6 | 7,1 |
| 32 | 2000 | 129 | 8 | 36 | 8,3 | 10,5 | 7,6 |

On constate qu'en l'absence de sel il n'est pas possible de stabiliser le polymère même avec 2 000 ppm de DMDTCS, contrairement aux résultats obtenus en eau salée. L'observation des solutions indique que le polysaccharide se présente, dans l'eau salée, sous la forme de bâtonnets rigides, tandis qu'il a une forme désordonnée en eau douce, à chaud ; les sites d'attaque du polymère sont donc moins accessibles dans le premier cas que dans le deuxième.

Contrairement aux exemples précédents, on a effectué des essais similaires avec de l'eau non désoxygénée.

Exemples 33 et 34

Solution aqueuse à 2 g/l de polysaccharide, renfermant, par litre, 300 g NaCl et 20 g $CaCl_2$, non désoxygénée.

| Ex. n° | DMDTCS ppm | Initial | | Après 1 mois à 90 °C | | Après 3 mois à 90 °C | |
|---|---|---|---|---|---|---|---|
| | | mPa.s | pH | mPa.s | pH | mPa.s | pH |
| 33 | 600 | 145 | 7,1 | 101 | 7 | 12 | 6,4 |
| 34 | 1000 | 145 | 7,1 | 143 | 7 | 141,5 | 6,8 |

Le diméthyl dithiocarbamate joue donc, en même temps, le rôle d'antioxydant et permet de stabiliser le polysaccharide en présence d'oxygène. La quantité minimale, nécessaire, voisine de 1 000 ppm, c'est-à-dire un peu plus élevée que celle qui suffit dans le cas de solution désoxygénée, est encore parfaitement viable pour la pratique.

Exemple 35

Suivant la technique des exemples 1 à 27, on a essayé le comportement d'un autre polysaccharide, le scléroglucane, polymère obtenu par la fermentation de sucres à l'aide d'un champignon. On a ainsi employé une solution aqueuse à 0,5 g/l du produit connu dans le commerce sous la dénomination « ACTIGUM CS 11 » de la Société CECA.

La solution renfermait, par litre :

0,5 g KCl 22 g NaCl, 1,8 g $CaCl_2 \cdot 2H_2O$ et 0,6 g $MgCl_2 \cdot 6H_2O$.

La température de chauffage était de 95 °C. Le même diméthyldithiocarbamate de sodium, DMDTCS, qu'aux exemples précédents, était employé à raison de 1 g/litre, parallèlement avec une solution témoin, exempte de ce stabilisant.

Les viscosités ont alors évolué de la façon suivante :

| | Solution témoin | Solution stabilisée |
|---|---|---|
| | mPa.s | mPa.s |
| Au départ | 14,4 | 14,2 |
| Après 1 jour à 95 °C | 8 | 13,9 |
| Après 2 jours à 95 °C | 4 | 13,8 |
| Après 3 jours à 95.°C env. | 2 | 13,7 |
| Après 30 jours à 95 °C env. | 1 | 13,2 |

Avec cet autre type de polysaccharide la stabilisation par le DMDTCS est donc aussi bonne qu'aux exemples précédents.

La concentration nécessaire en stabilisant, de 1 000 ppm (1 g/l) est tout à fait acceptable.

Dans les exemples qui précèdent, les sels, contenus dans la solution de polymère à stabiliser, sont des chlorures alcalins et alcalino-terreux. Cependant, l'invention est réalisable avec d'autres sels hydrosolubles, par exemple sulfates, sulfites, perchlorates, acétates, tartrates alcalins ou alcalino-terreux, phosphates ou borates en l'absence d'ions $Ca^{++}$, etc. Les exemples, donnés plus haut, montrent qu'il y a avantage à avoir une forte concentration en sel soluble dans la solution de polysaccharide à stabiliser. En général, une concentration 0,1 N en un ou plusieurs sels peut suffire, mais il est préférable qu'elle dépasse 0,4 N. Contrairement à l'art antérieur, cité plus haut, des concentrations supérieures à 1 N soit — dans le cas du NaCl — au delà de 58 g/litre, sont les meilleures ; les exemples 1 à 15 indiquent notamment qu'il est avantageux d'avoir 300 g de ce sel, par litre, c'est-à-dire 5, 13 N. Ainsi, le procédé suivant l'invention comporte-t-il l'emploi de solutions aqueuses de polysaccharide renfermant 200 à 5 000 ppm de celui-ci et un ou plusieurs sels de métal alcalin ou/et alcalino-terreux à une concentration de 0,1 à 10 N et de préférence de 0,4 à 6 N.

**Revendications**

1. Procédé de stabilisation à la chaleur de solutions aqueuses d'un polysaccharide, par l'addition à cette solution d'un thiocomposé organique, caractérisé en ce que le thiocomposé est un dialkyl dithiocarbamate de métal alcalin accompagné d'un sel hydrosoluble de métal alcalin ou/et alcalino-terreux, l'alkyle du dithiocarmabate étant en $C_1$ à $C_{12}$.

2. Procédé suivant la revendication 1, caractérisé en ce que l'alkyle du dithiocarbamate est en $C_1$ à $C_4$.

3. Procédé suivant la revendication 1 ou 2, caractérisé en ce que la solution est additionnée de 150 à 5 000 ppm de dialkyldithiocarbamate, et plus particulièrement de 300 à 600 ppm.

4. Procédé suivant une des revendications 1 à 3, caractérisé en ce que la concentration en sel hydrosoluble, dans la solution aqueuse, est de 0,1 à 10 N, et de préférence 0,4 à 6 N.

5. Procédé suivant la revendication 4, caractérisé en ce que le ou les sels hydrosolubles sont NaCl ou/et $CaCl_2$.

**Claims**

1. Process of thermal stabilization of aqueous solutions of a polysaccharide by the addition to such solution of an organic thiocompound, characterised in that the thiocompound is an alkali metal dialkyl

dithiocarbamate, accompanied by a water-soluble alkali metal and/or alkaline earth metal salt, the alkyl of the dithiocarbamate being from $C_1$ to $C_{12}$.

2. Process according to claim 1, characterised in that the alkyl of the dithiocarbamate is from $C_1$ to $C_4$.

3. Process according to claim 1 or 2, characterised in that 150 to 5 000 ppm of the dialkyl dithiocarbamate and, more particularly, 300 to 600 ppm is added to the solution.

4. Process according to any of claims 1 to 3, characterised in that the concentration of the water-soluble salt in the aqueous solution is from 0.1 to 10 N and preferably from 0.4 to 6 N.

5. Process according to claim 4, characterised in that the water-soluble salt or salts is/are NaCl and/or $CaCl_2$.

**Patentansprüche**

1. Verfahren zur Stabilisierung in der Wärme von wässerigen Lösungen eines Polysaccharids durch Zugabe einer organischen Thioverbindung zu dieser Lösung, dadurch gekennzeichnet, dass es sich bei der Thioverbindung um ein Dialkyldithiocarbamat eines Alkalimetalls, zusammen mit einem wasserlöslichen Alkalimetall- oder/und Erdalkalimetallsalz, handelt, wobei das Alkyldithiocarbamat 1 bis 12 C-Atome aufweist.

2. Verfahren nach Anspruch 1, dadurch gekennzeichnet, dass das Alkyldithiocarbamat 1 bis 4 C-Atome aufweist.

3. Verfahren nach Anspruch 1 oder 2, dadurch gekennzeichnet, dass die Lösung mit 150 bis 5 000 ppm Dialkyldithiocarbamat, und insbesondere mit 300 bis 600 ppm, versetzt ist.

4. Verfahren nach einem der Ansprüche 1 bis 3, dadurch gekennzeichnet, dass die Konzentration des wasserlöslichen Salzes in der wässerigen Lösung 0,1 bis 10 n und vorzugsweise 0,4 bis 6 n beträgt.

5. Verfahren nach Anspruch 4, dadurch gekennzeichnet, dass es sich bei dem oder den wasserlöslichen Salzen um NaCl oder/und $CaCl_2$ handelt.